# EUROPÄISCHE PATENTSCHRIFT

(11) **EP 2 607 429 B1**
(45) Veröffentlichungstag und Bekanntmachung des Hinweises auf die Patenterteilung: **26.06.2019**
(21) Anmeldenummer: 12195982.9
(22) Anmeldetag: 07.12.2012
(51) Int. Cl.: C08L 83/12, C04B 24/18, C04B 24/22, C04B 24/26, C04B 24/42

(54) **Entschäumerzusammensetzungen für Baustoffmischungen**
Antifoaming compositions for building material mixtures
Compositions d'agents antimoussants pour des mélanges de matériaux de construction

(30) Priorität: 22.12.2011 DE 102011089535
(43) Veröffentlichungstag der Anmeldung: 26.06.2013
(73) Patentinhaber: Evonik Degussa GmbH, 45128 Essen (DE)
(72) Erfinder: Henning, Frauke, 45259 Essen (DE); Reinschmidt, Anke, 45326 Essen (DE); Scheuermann, Ralph, 45359 Essen (DE); Bayne, George-Hans, 45239 Essen (DE); Klein, Kerstin, 47138 Duisburg (DE); Roos, Markus, 45289 Essen (DE)
(74) Vertreter: Evonik Patent Association

(56) Entgegenhaltungen:
- EP-A1- 2 107 077
- EP-A1- 2 159 248
- EP-A1- 2 182 020
- DE-A1-102010 029 588
- US-A1- 2010 186 870

## Beschreibung

### Gebiet der Erfindung

Die Erfindung betrifft Entschäumerzusammensetzungen für Baustoffmischungen, welche eine gute Kompatibilität mit Fließmitteln, insbesondere mit polaren Fließmitteln, aufweisen.

### Stand der Technik

Baustoffmischungen, insbesondere Beton- und Mörtelmischungen werden häufig mit Additiven zur Rheologiesteuerung beaufschlagt, um die Mischung fließfähig und damit gut verarbeitbar zu halten. Diese Additive, die auch Fließmittel genannt werden, sind im Stand der Technik beschrieben und basieren meist auf Polycarboxylatethern oder Sulfonaten von Lignin(-harzen), Melamin(-harzen) oder (Poly)naphthalin(-harzen), und werden meist in wässriger Lösung beim Anrühren der Baustoffmischung zugesetzt. (s. US 2010/0186870 A1). Nachteilig bei der Verwendung von Fließmitteln ist der höhere Lufteintrag in die Baustoffmischung und damit auch im härtenden Beton und Mörtel. Das führt zu Verlusten der mechanischen Festigkeit und Witterungsstabilität. Daher müssen Entschäumer oder Entlüfter als weitere Additive zugesetzt werden, um den Lufteintrag zu reduzieren.

Die im Stand der Technik verwendeten Entschäumer haben den Nachteil, dass sie häufig nicht wasserlöslich sind und sich damit nicht gleichmäßig in den wässrigen Systemen verteilen. Formuliert man eine Additivmischung aus Fließmittel und Entschäumer, so erhält man häufig trübe Mischungen, bei denen nach relativ kurzer Zeit eine Phasentrennung zwischen dem polaren Fließmittel und dem unpolaren, grenzflächengängigen Entschäumer auftreten kann. Im noch ungünstigeren Fall gelingt es gar nicht erst eine Emulsion zu formulieren.

Im Stand der Technik sind keine wasserlöslichen Entschäumer für hydraulisch härtbare Baustoffe auf Siloxanbasis bekannt, die sich im relevanten Konzentrationsbereich mit Fließmitteln des Standes der Technik mischen lassen und die sich nicht in separierbare Phasen trennen.

Aufgabe der vorliegenden Erfindung war deshalb die Bereitstellung von wasserlöslichen Verbindungen zur Verwendung als Entschäumer in hydraulisch härtbaren Baustoffen, die eine gute Kompatibilität zu Fließmitteln aufweisen.

### Beschreibung der Erfindung:

Überraschenderweise wurde gefunden, dass wasserlösliche Siloxane mit mindestens zwei unterschiedlichen Polyalkoxylenresten diese Aufgabe lösen.

Dies ist insbesondere deshalb für den Fachmann überraschend und unvorhersehbar, da hydrophile organisch modifizierte Siloxane eher zur Schaumstabilisierung verwendet werden als zur Entschäumung, wie beispielsweise die Patentanmeldung DE 10 2008 043343.8 (US 2010 0113633 A1) beschreibt.

Gegenstand der vorliegenden Erfindung sind deshalb Zusammensetzungen enthaltend mindestens ein Siloxan der Formel (I) und ein oder mehrere Fließmittel, auf Basis von Polycarboxylatethern und/oder Sulfonaten von Melamin oder von deren Harzen. Ebenfalls Gegenstand der vorliegenden Erfindung ist die Verwendung von Siloxanen der Formel (I) oder Zusammensetzungen enthaltend mindestens ein Siloxan der Formel (I) sowie ein oder mehrere Fließmittel in oder zur Herstellung von Baustoffmischungen und deren Verwendung, insbesondere als Entschäumer, sowie die entsprechenden Baustoffmassen.

Die erfindungsgemäße Verwendung von Siloxanen der Formel (I) zur Herstellung von Baustoffmischungen hat den Vorteil, dass diese Siloxane eine gute Verträglichkeit/Kompatibilität mit üblicherweise verwendeten Fließmitteln aufweisen. Durch die gute Kompatibilität mit den Fließmitteln wird erreicht, dass Zusammensetzungen, die die Siloxane der Formel (I) sowie Fließmittel aufweisen relativ lange stabil sind, wobei unter stabil verstanden wird, dass die erfindungsgemäßen Zusammensetzungen optisch transparent sind bzw. sich die Komponenten nicht nach 90 Tagen bei 25°C soweit entmischen, dass diese Komponenten in zwei Phasen vorliegen, die nur eine gemeinsame Phasengrenze aufweisen. Emulsionen, in denen zwar zwei Phasen vorliegen aber mehreren Phasengrenzen vorhanden sind, werden im Rahmen der vorliegenden Erfindung als stabil bezeichnet.

Durch die gute Kompatibilität und Stabilität wird erreicht, dass in Lagerbehältnissen keine Konzentrationsgradienten über die Höhe des Lagerbehälters auftreten. Damit ist sichergestellt, dass auch bei längerer Lagerung und bei unterschiedlichem Füllstand im Behälter aus dem Behälter immer Zusammensetzungen mit gleichen Konzentrationsverhältnissen entnommen werden können.

Ein weiterer Vorteil der erfindungsgemäßen Zusammensetzungen liegt in ihrer guten Entschäumungswirkung.

Zur Beurteilung des Schaumverhaltens der wässrigen Lösungen der Entschäumer (beispielsweise der in Tabelle 4 aufgeführten) und der Fließmittelabmischungen (beispielsweise der in Tabelle 5 aufgeführten) können die entsprechenden Mischungen geschüttelt werden. Der Schaumabbau kann über die Zeit beobachtet werden.

Die erfindungsgemäßen Zusammensetzungen oder die Siloxane der Formel (I) weisen in Baustoffmischungen wie Beton- oder Mörtelmischungen eine sehr gute Entlüftung auf. Weiterhin wiesen die Baustoffmischungen unter Verwendung der erfindungsgemäßen Zubereitungen ein hohes Ausbreitmaß auf.

Ein weiterer Vorteil der erfindungsgemäßen Zusammensetzungen enthaltend ein oder mehrere Siloxane der Formel (I) und ein oder mehrere Fließmittel besteht in ihrer geringen Toxizität der Siloxane der Formel (I), da es sich um Polymere handelt, so dass eine Resorption im Vergleich zu niedermolekularen Stoffen deutlich reduziert ist. Beispielsweise wird als Entschäumer in Kombination mit PCE-Fließmitteln vielfach Tributylphosphat (CAS RN 126-73-8; z.B. von Lanxess Deutschland GmbH oder Merck KGaA) eingesetzt, welches die H- und P-Sätze H: 351-302-315 und P: 281-302+350-308+313 trägt. Auch das oft verwendete Triisobutylphosphat (CAS RN 126-71-6; ebenfalls von z.B. von Lanxess Deutschland GmbH oder Merck KGaA) kann nicht als unbedenkliche Alternative betrachtet werden (H: 317-412 und P: P262-273-280-302+352), so dass die erfindungsgemäßen Verbindungen insbesondere vor dem Hintergrund der auf Baustellen üblichen Sicherheitseinrichtungen beim Lagern bzw. der Handhabung der Materialien eine deutliche Verbesserung darstellen.

Es kann vorteilhaft sein, wenn die erfindungsgemäßen Zusammensetzungen enthaltend ein oder mehrere Siloxane der Formel (I) und ein oder mehrere Fließmittel, als weiteren Zusatz Wasser enthalten.

Die erfindungsgemäßen Zusammensetzungen enthaltend ein oder mehrere Siloxane der Formel (I) und ein oder mehrere Fließmittel, auf Basis von Polycarboxylatethern und/oder Sulfonaten von Melamin oder von deren Harzen sowie deren Verwendungen in oder zur Herstellung von Baustoffmischungen und deren Verwendung, insbesondere als Entschäumer und/oder als Entlüfter werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Wenn im nachfolgenden Mittelwerte angegeben sind, so handelt es sich, wenn nicht anders angegeben, um zahlengemittelte Mittelwerte. Werden Molmassen verwendet, handelt es sich, wenn nicht ausdrücklich anders vermerkt um gewichtsmittlere Molmassen Mw. Werden nachfolgend oder vorhergehend Gehaltsangaben (ppm oder %) gemacht, so handelt es sich, wenn nicht anders angegeben, um Angaben in Gewichts-% oder Gewichts-ppm. Bei Zusammensetzungen beziehen sich die Gehaltsangaben wenn nicht anders angegeben auf die Gesamtzusammensetzung.. Werden nachfolgend Messwerte angegeben so wurden diese, wenn nicht anders angegeben, bei einer Temperatur von 25 °C und einem Druck von 1013 mbar bestimmt.

Die erfindungsgemäßen Zusammensetzungen enthalten mindestens ein organisch modifiziertes Siloxan der Formel (I)

Mₐ₁M^{A}ₐ₂M^{B}ₐ₃M^{C}ₐ₄D_{b1}D^{A}_{b2}D^{B}_{b3}D^{C}_{b4}T_{c1}T^{A}_{c2}T^{B}_{c3}T^{C}_{c4}Q_{d1} Formel (I)

worin
- a1: = 0 bis 32; bevorzugt 0 bis 22, insbesondere größer 0 bis 12;
- a2: = 0 bis 10, bevorzugt 0 bis 5, insbesondere 0;
- a3: = 0 bis 32; bevorzugt größer 0 bis 22, insbesondere 1 bis 12;
- a4: = 0 bis 10; bevorzugt 0 bis 5, insbesondere 0;
- b1: = 1 bis 600, bevorzugt 10 bis 500, insbesondere 20 bis 400;
- b2: = 0 bis 10, bevorzugt 0 bis 5, insbesondere 0;
- b3: = 0 bis 80, bevorzugt 0 bis 50, insbesondere größer 0 bis 10;
- b4: = 0 bis 20, bevorzugt 0 bis 10, insbesondere 0;
- c1: = 0 bis 30, bevorzugt 1 bis 20, insbesondere 2 bis 15;
- c2: = 0 bis 10, bevorzugt 0 bis 5, insbesondere 0;
- c3: = 0 bis 10, bevorzugt 0 bis 5, insbesondere 0;
- c4: = 0 bis 10, bevorzugt 0 bis 5, insbesondere 0;
- d1: = 0 bis 15, bevorzugt 1 bis 12, insbesondere 2 bis 10;
mit der Maßgabe, dass
a1 + a2 + a3 + a4 > 3, bevorzugt > 4 und;
a3 + b3 + c3 ≥ 1, bevorzugt > 3 und;
c1 + c2 + c3 + c4 > 1, bevorzugt > 2, insbesondere ≥ 3;
- M: = [R¹₃SiO_{1/2}]
- M^{A}: = [R²R¹₂SiO_{1/2}]
- M^{B}: = [R³R¹₂SiO_{1/2}]
- M^{C}: = [R⁴R¹₂SiO_{1/2}]
- D: = [R¹₂SiO_{2/2}]
- D^{A}: = [R²₁R¹₁SiO_{2/2}]
- D^{B}: = [R³₁R¹₁SiO_{2/2}]
- D^{C}: = [R⁴₁R¹₁SiO_{2/2}]
- T: = [R¹SiO_{3/2}]
- T^{A}: = [R²SiO_{3/2}]
- T^{B}: = [R³SiO_{3/2}]
- T^{C}: = [R⁴SiO_{3/2}]
- Q: = [SiO_{4/2}],

- R¹: mindestens ein Rest aus der Gruppe linearer, cyclischer oder verzweigter, aliphatischer oder aromatischer, gesättigter oder ungesättigter Kohlenwasserstoffreste mit 1 bis zu 20 C-Atomen, wobei besonders bevorzugt alle Reste R¹ Methylreste sind,
- R²: ein Wasserstoff-, Alkoxy-, Carboxy-, Hydroxyl- oder ein Sulfonsäureesterrest, bevorzugt ein Wasserstoff-, Ethoxy-, Methoxy-, Acetoxyrest oder -O-S(O)₂-CF₃ ist,
- R³: gleiche oder ungleiche Reste aus der Gruppe umfassend
-CH₂-CH₂-CH₂-O-(CH₂-CH₂O-)ₓ-(CH₂-C(R')₂O-)_{y}-(SO)_{z}-R" -CH₂-CH₂-O-(CH₂-CH₂O-)ₓ-(CH₂-C(R')₂O-)_{y}-R"
sind, worin
x = 0 bis 100, vorzugsweise größer 0 bis 50, insbesondere 1 bis 30,
y = 0 bis 100, vorzugsweise 0 bis 50, insbesondere größer 0 bis 29
z = 0 bis 100, vorzugsweise 0 bis 10, insbesondere 0
mit der Maßgabe, dass x gleich oder ungleich y sein kann und bevorzugt für mindestens einen der Reste R³ gilt, das x gleich oder größer y ist,
R' unabhängig voneinander gleich oder verschieden Wasserstoff und/oder ein gesättigter, ungesättigter oder aromatischer Kohlenwasserstoffrest mit 1 bis 12 C-Atomen, gegebenenfalls mit Heteroatomen, mit Alkyl- oder Arylresten, mit Halogenalkyl-, Halogenarylresten substituiert, wobei die Heteroatome ausgewählt sind aus der Gruppe enthaltend O, N und/oder S und die Halogen haltigen Reste bevorzugt para-Chlorphenyl- oder Cl-CH₂-Reste sind, besonders bevorzugt ist ein CH₂=CH-CH₂-O-CH₂-Rest oder eine Methylgruppe als Kohlenwasserstoffrest, insbesondere bevorzugt ist der Kohlenwasserstoff eine Methylgruppe,
R" einen Wasserstoffrest oder eine Alkylgruppe mit 1 bis 4 C-Atomen, eine Gruppe -C(O)-R''' mit R''' = Alkylrest, eine Gruppe -CH₂-O-R', eine Alkylarylgruppe, wie z. B. eine Benzylgruppe, die Gruppe -C(O)NH-R' oder -C(O)O-R',
bevorzugt Wasserstoff oder Methyl bedeutet,
SO ein Styroloxid-Rest -CH(C₆H₅)-CH₂-O- oder -CH₂-CH(C₆H₅)-O- ist,
- R⁴: gleiche oder ungleiche Reste aus der Gruppe der mit Heteroatomen substituierten, linearen, verzweigten oder zyklischen, gesättigten, ungesättigten oder aromatischen, gegebenenfalls von Heteroatomen unterbrochenen Kohlenwasserstoffreste sind,
und mindestens ein Fließmittel aus Basis von Polycarboxylatethern oder Sulfonaten von oder von deren Harzen, vorzugsweise ein Fließmittel auf Basis von Polycarboxylatethern.

Bevorzugt sind erfindungsgemäße Zusammensetzungen enthaltend mindestens ein organisch modifiziertes Siloxan der Formel (I), bei denen der Rest
- R⁴: ausgewählt ist aus der Gruppe Hydroxyalkyl-, Hydroxyaryl, Aminoalkyl, Aminoaryl, Carboxyalkyl-, Carboxyaryl-, Epoxyalkyl-, Epoxyaryl-, Chloralkyl-, Chloraryl-, Fluoralkyl-, Cyanoalkyl-, Alkoxysilylalkyl-, Acryloxyaryl-, Acryloxyalkyl-, Methacryloxyalkyl-, Methacryloxypropyl- oder Vinyl-Reste oder Reste mit quaternären Stickstoffgruppen sowie der Reste --CH₂-CH₂-CH₂-O-CH₂-CH(OH)-CH₂OH, --CH₂-CH₂-CH₂-O-CH₂-C(CH₂OH)₂-CH₂-CH₃, 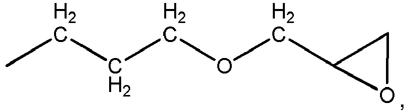 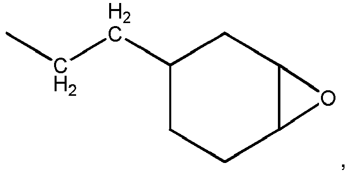 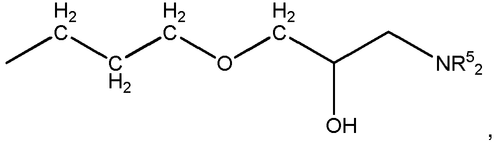 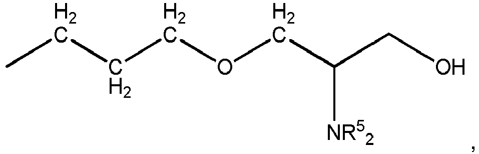 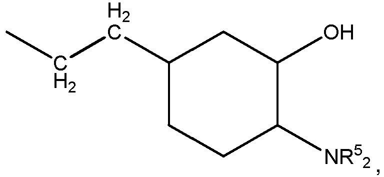 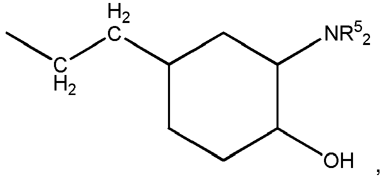 mit
R⁵ = R¹ und/oder Wasserstoff.

Weiterhin bevorzugt sind erfindungsgemäße Zusammensetzungen enthaltend mindestens ein organisch modifiziertes Siloxan der Formel (I), bei denen die Reste mit quaternären Stickstoffgruppen ausgewählt sind aus der Gruppe 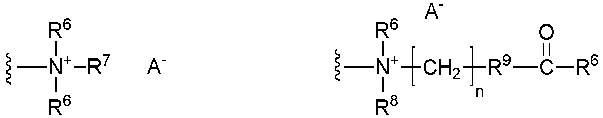 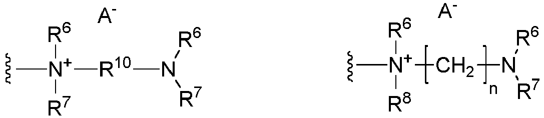 worin
R⁶, R⁷, R⁸ = jeweils unabhängig voneinander Wasserstoff oder Alkylreste mit 1 bis 30 C-Atomen oder Reste der Formel 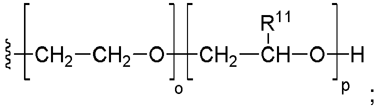
- R⁹: gleiche oder verschiedene Reste aus der Gruppe - O-; -NR¹²-;
- R¹⁰: gleiche oder verschiedene gegebenenfalls verzweigte divalente Kohlenwasserstoffreste, bevorzugt Ethylen oder Propylen;
- R¹¹: gleiche oder verschiedene Alkyl-, Aryl- oder Alkarylreste mit 1 bis 30 C-Atomen, die gegebenenfalls Etherfunktionen enthalten, bevorzugt Methyl, Ethyl oder Phenyl, insbesondere Methyl;
- R¹²: gleiche oder verschiedene Reste aus der Gruppe Wasserstoff oder Alkyl mit 1 bis 6 C-Atomen;
mit
- n: = 2 bis 18, bevorzugt 3;
- o: = 0 bis 30, bevorzugt 0 bis 10, insbesondere 1 bis 3;
- p: = 0 bis 30, bevorzugt 0 bis 10, insbesondere 0;
mit der Maßgabe, dass o gleich oder ungleich p sein kann und bevorzugt o gleich oder größer p ist,
und
A⁻ = gleiche oder verschiedene Gegenionen zu den positiven Ladungen an den quaternierten Stickstoffgruppen, ausgewählt aus anorganischen oder organischen Anionen der Säuren HA, sowie deren Derivate.

Bevorzugt sind weiterhin Zusammensetzungen enthaltend ein oder mehrere Siloxane der Formel (I), deren gegebenenfalls vorhandene Aminofunktionalität als ionisches Addukt mit protischen Reaktanden H⁺A⁻ vorliegt. Das Addukt liegt in der Form eines protonierten Amins mit dem Anion A⁻ vor. Die Anionen A⁻ sind gleiche oder verschiedene Gegenionen zu den positiven Ladungen an den protonierten, primären Aminogruppen, ausgewählt aus anorganischen oder organischen Anionen der Säuren H⁺A⁻, sowie deren Derivate. Bevorzugte Anionen sind beispielsweise Sulfat und Hydrogensulfate, Carbonat und Hydrogencarbonat, Acetat und homologe Carboxylate mit linearen oder verzweigten, gesättigten oder olefinisch ungesättigten Alkylketten, aromatische Carboxylate, aus Aminosäuren gebildete Carboxylate, Citrate, Malonate, Fumarate, Maleate, substituierte und unsubstituierte Succinate und aus Hydroxycarbonsäuren gebildete Carboxylate, wie beispielsweise Lactat. Die aminosubstituierten Siloxane der Formel (I) und ihre ionischen Addukte können je nach Stabilität des gebildeten Addukts in Dissoziationsgleichgewichten vorliegen.

Sofern im Umfang dieser Erfindung auf Naturstoffe Bezug genommen wird, z.B. Lactat, sind grundsätzlich alle Isomeren damit gemeint, bevorzugt sind die jeweils in der Natur vorkommenden Isomere, im hier genannte Falle also das L-Lactat. Zur Definition von Naturstoffen wird auf den Umfang des "Dictionary of Natural Products", Chapman and Hall/CRC Press, Taylor and Francis Group, z.B. in der online Ausführung von 2011: http://dnp.chemnetbase.com/ verwiesen.

Die verschiedenen Fragmente der in der Formel (I) angegebenen Siloxanketten können statistisch verteilt sein. Statistische Verteilungen können blockweise aufgebaut sein mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden.

Die hier wiedergegebenen Indexzahlen und die Wertbereiche der angegebenen Indizes können als Mittelwerte der möglichen statistischen Verteilung der tatsächlichen vorhandenen Strukturen und/oder deren Mischungen verstanden werden. Dies gilt auch für als solche an sich exakt wiedergegebene Strukturformeln, wie beispielsweise für Formel (I) und Formel (II).

Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

Die Begriffe Alkoxylen und Oxyalkylen selbst wie auch in zusammengesetzten Begriffen werden synonym verwendet und bedeuten einen zweiwertigen Rest dessen eine Bindung über einen Sauerstoff und die andere Bindung über einen Kohlenstoff erfolgen, zwischen diesen Bindeatomen befindet sich mindestens ein Kohlenstoffatom.

GPC-Messungen zur Bestimmung der Polydispersität und mittleren Molmassen werden unter den folgenden Messbedingungen durchgeführt: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard.

Die Jodzahlen [g Jod/100 g Probe] werden nach der Methode nach Hanus, bekannt als Methode DGF C-V 11 a (53) der Deutschen Gesellschaft für Fette, bestimmt und in die Molmassen MG_{JZ} der jeweiligen Polyether umgerechnet.

Bevorzugt sind erfindungsgemäße Zusammensetzungen, deren Siloxane der Formel (I) dadurch gekennzeichnet sind, dass der Rest R³ aus einer Gruppe von mindestens zwei verschiedenen Polyethern ausgewählt ist. Besonders bevorzugt sind Siloxane, bei denen mindestens drei unterschiedliche Reste R³ vorhanden sind, von denen mindestens einer eine Hydroxyfunktion am Kettenende trägt.

Bevorzugt sind weiterhin Siloxane, in denen mindestens ein Rest R³ eine Molmasse von mehr als 500g/mol und vorzugsweise gleich oder weniger 8000 g/mol aufweist.

Weiterhin ist es vorteilhaft im Sinne der vorliegenden Erfindung, wenn die Polydispersitäten der verwendeten Polyether (bzw. Polyetherreste) M_{w}/Mₙ im Bereich von 1,0 bis 1,5 und deren Quotienten Mₙ/MG_{JZ} und M_{w}/MG_{JZ} im Bereich von 0,7 bis 1,3 liegen, wobei MG_{JZ} das dem Fachmann bekannte aus der Jodzahl berechnete Molgewicht ist.

Weiterhin bevorzugt sind erfindungsgemäße Zusammensetzungen, deren Siloxane der Formel (I) die folgenden Bedingungen erfüllen, a3+b3 ≠ 0 und a4+b4 ≠ 0 mit x ≠ 0 und y ≠ 0, und wobei R⁴ ausgewählt ist aus der Gruppe umfassend (2-Triethoxysilyl)-1-ethyl-, Carboxyalkyl-, Carboxyaryl-, wie z.B. Bernsteinsäuremonohexylester oder Phthalsäuremonohexylester, Aminopropyl-, (N-Aminoethyl)-3-aminopropyl-, (N-Ethyl)-2-methyl-3-aminopropyl- und ein Rest mit einer quaternären Stickstoffgruppe, wie z.B. ein Trimethylammoniumpropylrest.

Weiterhin bevorzugt sind erfindungsgemäße Zusammensetzungen, deren Siloxane der Formel (I) genügen, für die gilt a3+b3 ≠ 0 und R¹ = Methylrest oder Kohlenwasserstoffrest mit mehr als 10 Kohlenstoffatomen, wobei das molare Verhältnis von Methylresten zu Kohlenwasserstoffresten mit mehr als 10 Kohlenstoffatomen von 10:1 bis 100:1 beträgt.

Weiterhin bevorzugt sind erfindungsgemäße Zusammensetzungen enthaltend Siloxane der Formel (I), in denen die gewichtsprozentualen Anteile des Siloxans im organomodifizierten Siloxancopolymer bei 10-90 Gew.-%, insbesondere 25-75 Gew.-% liegen.

Die Siloxane der Formel (I) können auf jede erdenkliche Art und Weise hergestellt werden. Vorzugsweise erfolgt die Herstellung der Siloxane der Formel (I) wie in DE 10 2008 043343 (US 2010 0113633 A1), DE 10 2009 003274 (US 2010 0298455 A1), DE 10 2007 055485 (US 2010 0249339 A1) oder DE 10 2008 041601 (US 2010 0056649 A1), bevorzugt wie in DE 10 2008 043343 beschrieben.

In der erfindungsgemäßen Zusammensetzung beträgt der Massenanteil von Siloxanen der Formel (I) bezogen auf die Summe der Massenanteile der Siloxane und der Fließmittel in der Zusammensetzung vorzugsweise von 0,01 bis 10%, bevorzugt von 0,05 bis 2% und besonders bevorzugt von 0,1 bis 1%.

Als Fließmittel der oben genannten Art können alle Fließmittel eingesetzt werden, die aus dem Stand der Technik bekannt sind [Plank, J.: Current Developments on Concrete Admixtures in Europe. In: Proc. Symposium on Chemical Admixtures in Concrete, Dalian (China) 2004.]. Vorzugsweise werden als Fließmittel Polymere aus alpha-beta-ungesättigten Carbonsäuren mit Polyoxyalkylen Seitenketten, sogenannte Polycarboxylatether, eingesetzt. Diese Polycarboxylatether haben eine Kammpolymerstruktur. Bevorzugt handelt es sich bei den Kammpolymeren um Polymere, an welcher über Ester-, Amid-, Imid- und/oder Ethergruppen Seitenketten an die Hauptkette angebunden sind. Derartige Polycarboxylatether basierte Fließmittel sind beschrieben in WO2006133933, US 6620879, US 6211317, US 7425596, US 6893497, US 7238760, US2002/0019459, US 6,267,814, US 6,290,770, US 6,310,143, US 6,187,841, US 5,158,996, US 6,008,275, US 6,136,950, US 6,284,867, US 5,609,681, US 5,494,516; US No. 5,674,929, US 5,660,626, US 5,668,195, US 5,661,206, US 5,358,566, US 5,162,402, US 5,798,425, US No. 5,612,396, US 6,063,184, US 5,912,284, US 5,840,114, US 5,753,744, US 5,728,207, US 5,725,657, US 5,703,174, US 5,665,158, US 5,643,978, US No. 5,633,298, US No. 5,583,183, and US 5,393,343. Diese Schriften sind vollumfänglich Bestandteil der vorliegenden Erfindung.

Derartige kammartige Polycarboxylatether können durch die Formel (II) ausgedrückt werden 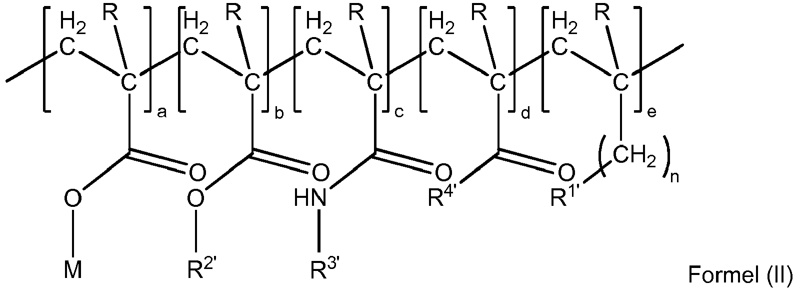 wobei
die Gruppe M je nach Natur der Gruppe M und solvatisierenden Bedingungen kovalent bis ionisch gebunden sein kann, in ionischer Ausdrucksweise ist M unabhängig voneinander H⁺, Alkalimetallion, Erdalkalimetallion, zwei- oder dreiwertiges Metallion, Ammoniumion oder organische Ammoniumgruppe
n gleich 0 bis 2,
R je unabhängig voneinander Wasserstoff oder Methyl,
R^{1'} unabhängig voneinander ein terminal mit Wasserstoff oder R^{5'} substituierter Oxyalkylenrest ist, wobei der Alkylenrest vorzugsweise ein C₂ bis C₁₀ Alkylen- und/oder Alkarylenresten, bevorzugt Ethylen, 1,2-Propylen, 1,2-Butylen oder Phenylethylen mit 2 bis 250 Wiederholungen, bevorzugt mit 8 bis 200 Wiederholungen und insbesondere bevorzugt mit 10 bis 100 Wiederholungen ist,
R^{2'} und R^{3'} unabhängig voneinander Alkyl-, Cycloalkyl- mit 1 bis 20 Kohlenstoffatomen, Alkylaryl- mit 6 bis 20 Kohlenstoffatomen oder ein terminal mit Wasserstoff oder R^{5'} substituierter Oxyalkylenrest ist, wobei der Alkylenrest aus C₂ bis C₁₀ Alkylen- und/oder Alkarylenresten, bevorzugt Ethylen, 1,2-Propylen, 1,2-Butylen mit 2 bis 250 Wiederholungen, bevorzugt mit 8 bis 200 Wiederholungen und insbesondere bevorzugt mit 10 bis 100 Wiederholungen ist,
R^{4'} unabhängig voneinander für -NH₂, -NR^{6'}R^{7'} oder -OR^{8'}NR^{9'}R^{10'}, wobei R^{6'} und R^{7'} unabhängig voneinander Alkyl-, Cycloalkyl- mit 1 bis 20 Kohlenstoffatomen, oder Alkylaryl-, Aryl-Gruppe mit 6 bis 20 Kohlenstoffatomen ist oder eine Hydroxyalkylgruppe, wie beispielsweise Hydroxyethyl, Hydroxypropyl, Hydroxybutylgruppe ist, oder eine Acetoxyethyl- (CH₃-C(O)-O-CH₂-CH₂-), Hydroxyisopropyl- (HO-CH(CH₃)-CH₂-), Acetoxyisopropylgruppe (CH₃-C(O)-O-CH(CH₃)-CH₂-), oder R^{6'} und R^{7'} gemeinsam einen Ring bilden, von dem der Stickstoff ein Teil ist, um einen Morpholin- oder Imidazolinring aufzubauen,
R^{5'} unabhängig voneinander Alkyl-, Cycloalkyl- mit 1 bis 20 Kohlenstoffatomen, Alkylaryl- mit 6 bis 20 Kohlenstoffatomen,
R^{8'} unabhängig voneinander eine C₂ bis C₄- Alkylengruppe,
R^{9'} und R^{10'} unabhängig voneinander Alkyl-, Cycloalkyl-, Hydroxyalkyl- mit 1 bis 20 Kohlenstoffatomen, Alkylaryl- mit 6 bis 20 Kohlenstoffatomen,
wobei die Indices a, b, c, d und e den molaren Anteil der Fragmente im kammartigen Polycarboxylatether der Formel (II) darstellen, damit bilden die Indices a, b, c, d und e die Summe 1. Weiterhin bevorzugt ist die Summe c + d größer 0.

Bevorzugt beträgt das Verhältnis der Indices a zu b zu c zu d zu e gleich (0,1 - 0,9) zu (0,1 - 0,9) zu (0 - 0,8) zu (0 - 0,3) zu (0 - 0,5).

Die Fragmente mit den Indices a, b, c, d und e der Formel (II) können statistisch verteilt sein. Statistische Verteilungen können blockweise aufgebaut sein mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können.

Die hier wiedergegebenen Indexzahlen der Formel (II) und die Wertbereiche der angegebenen Indizes können als Mittelwerte der möglichen statistischen Verteilung der tatsächlichen vorhandenen Strukturen und/oder deren Mischungen verstanden werden.

Die Polycarboxylatether weisen vorzugsweise ein Molekulargewicht Mw im Bereich von 3000 - 200000 g/mol, vorzugsweise 6000 - 100000 g/mol, besonders bevorzugt 8000 - 50000 g/mol, auf.

Polycarboxylatether im Sinne der Erfindung sind besonders bevorzugt aber nicht auf diese beschränkt ausgewählt aus: Mighty 3000S, Mighty 3000H, Mighty 3000R, Mighty 21LV, Mighty 21VS, Mighty 21HF and Mighty 21HP Produkte der Kao Corporation; Aqualock FC600S and FC900 Aqualock Produkte der Nippon Shokubai Co., Ltd.; MalialimAKM-60F, Malialim EKM-60K and Malialim Y-40 Produkte der Nippon Oil & Fats Co., Ltd.; Rehoplus 25, Reobuild SP Serie (8LS, 8LSR, 8N, 8S, 8R, 8SE, 8RE, 8SB-S, 8SB-M, 8SB-L, 8SB-LL, 8HE, 8HR, 8SV, 8RV), Reobuild® Serie (1000, 1004, 2030, 2424, 860 W1, 888 8000S, 8000E, 8000H), Glenium® Serie (3030NS, 3400NV, 3000NS, 3200HES, 27, 51, 206, C301, C323, C315), ACE Serie (ACE28, 30, 32, 38, 40, 48, 68, 327, 329 und ACE338), SKY Serie (SKY501, 503, 505, 517, 528, 555, 573, 578, 582, 583, 584, 591, 592, 593, 657, 658, 659 und SKY910+), SP-8CR, SP-8CN, SP-8N, 8000, SP-8L) and Melflux® Serie (1318, 1641, 2453, 2424, 2500, 2510, 2650, 2651 F, 4930, und Meflux 5581) Warenzeichen und Produkte der BASF, BASF Performance Products GmbH, Krieglach, Östereich; Sikament® Serie (Sikament 1200N, 1100NT, 1100NTR, 1100NT-PWR, 1100NT-PSK, 2300, 5370 und Sikament 686), Viscocrete® Serie (Viscocrete 20 HE, 20 Gold, 111 P, 120 P, 125 P, 225 P, 1020 X, 1035, 1040, 1050, 1051, 1052, 1053, 1055, 1057, 1062, 1063, 1065, 220 HE, 2420, 2500, 2600, 2610, 2620, SC-305, SC-400, 2100, 4100, 6100, 20HE, 3010, 5-500, 5-300, 5 und Viscocrete 20SL), ViscoFlow®-20, Sika GS-1, Sika GS-2, Warenzeichen und Produkte der Sika Deutschland GmbH, Stuttgart, Deutschland; Muestra Serie (Muestra 2, Muestra 3), Plastol Ultra 109, Produkt der Euclid Chemical Company, Cleveland, USA; Tuepole HP-8, Tuepole HP-11, Tuepole HP-8R, Tuepole HP-11R, Tuepole HP-11X, Tuepole SSP-104, Tuepole SSP-116, Tuepole HP70, Tuepole NV-G1 and Tuepole NV-G5 Produkte der Takemoto Oil & Fat Co., Ltd.; ADVA® Serie (ADVA CAST 570, Flow 340, Flow 341, Flow 355, Flow 356, Flow 400, 100 Superplasticizer, ADVA 140, 170, 360, 370, ADVA Cast 500, Cast 530, Cast 540 und ADVA Cast 555 Warenzeichen und Produkte der W. R. Grace Inc., Cambridge, Massachusetts; Sokalan® Serie (HP80, 5009X, 5010X, DS3557, R401) Warenzeichen und Produkte der BASF AG; Powerflow Serie (WR, HWR, SR, SD, WD, WD-K) Produkte der KG Chemical Co., Ltd., Korea; Dynamon series (SP1, SR3), Vibromix series and Mapeifluid series (Mapei) Warenzeichen und Produkte der Mapei S.p.A., Italien; SUPERFLUX® Warenzeichen und Produkte der Axim Concrete Technologies Inc., Middlebranch, Ohio; und Structuro Serie (Structuro 530, 4020805, 11180, 111X, 290, 100HC, 400X, 285, 402, 335 und Structuro 200), Produkte der AI Gurg Fosroc LLC, Dubai.

Die erfindungsgemäßen Zusammensetzungen können weitere Inhaltsstoffe, insbesondere Lösungsmittel und Bindemittel aufweisen. Als Lösungsmittel kann die erfindungsgemäße Zusammensetzung insbesondere Wasser oder ein- oder mehrwertige monomere, oligomere oder polymere Alkohole wie Ethylenglykol, Propylenglykol, Butyldiglykol, Dipropylenglykol, Polyethylenglykol oder Polypropylenglykol aufweisen. Vorzugsweise weist die erfindungsgemäße Zusammensetzung so viel Lösungsmittel auf, dass das Massenverhältnis von Lösungsmittel zu Siloxanen der Formel (I) von 0,1 zu 1 bis 100 zu 1, bevorzugt von 0,2 zu 1 bis 20 zu 1 und besonders bevorzugt von 0,3 zu 1 bis 10 zu 1 beträgt.

Die erfindungsgemäße Zusammensetzung kann als Bindemittel z. B. alle in der Baubranche bekannten Bindemittel aufweisen. Die erfindungsgemäße Zusammensetzung kann eines oder mehrere dieser Bindemittel aufweisen. Bevorzugte Bindemittel sind ausgewählt aus Zement und Calciumsulfat (oder dessen Kristallwasser aufweisende Modifikationen) aufweisenden Bindemitteln, wie z. B. Gips. Bevorzugte Bindemittel sind Zement oder Gips, besonders bevorzugt Zement.

Als Zement kann jeder bekannte Zement verwendet werden. Vorzugsweise wird ein Zement eingesetzt, der zumindest ein Calciumsilicat, -aluminat und/oder -ferrit enthält. Bevorzugt werden Portlandzement (CEM I), Portlandkompositzement (CEM II), Hochofenzement (CEM III), Puzzolanzement (CEM IV) und Kompositzement (CEM V) oder Tonerdeschmelzzement eingesetzt, wie in der Literatur beschrieben (Zement, Grundlagen der Herstellung und Verwendung, Verlag Bau+Technik, 2000). Die Zusammensetzung weist vorzugsweise als weiteren Zuschlagstoff Sand auf. Der Sand weist vorzugsweise eine maximale Korngröße von 4 mm auf. Die Korngröße kann durch einfache Siebung bestimmt werden.

Neben oder an Stelle von Sand, vorzugsweise neben Sand, kann die erfindungsgemäße Zusammensetzung auch Kies aufweisen. Der verwendete Kies weist vorzugsweise eine minimale Korngröße von größer 4 mm auf.

Weitere geeignete Zuschlagstoffe, die in den erfindungsgemäßen Zusammensetzungen enthalten sein können, können z. B. dem Römpp Chemielexikon, Georg Thieme Verlag, 2011 unter dem Stichwort Betonzuschlag (Dokumentkennung RD-02-01140) entnommen werden.

Das Massenverhältnis von Zuschlagstoffen zu der Mischung aus Fließmittel und Siloxanen der Formel (I) beträgt vorzugsweise 10 zu 1 bis 100000 zu 1, bevorzugt von 20 zu 1 bis 10000 zu 1 und besonders bevorzugt von 100 zu 1 bis 1000 zu 1.

Weitere Bestandteile der erfindungsgemäßen hydrophilen Entschäumerzusammensetzungen können sein Verzögerer wie Gluconate, Tartrate oder Phosphonate, Beschleuniger wie Lithiumcarbonat, Antischrumpfadditive wie ein- oder mehrwertige Alkohole, Konservierungsmittel, Pigmente wie Titandioxid oder organische Pigmente, Frostschutzmittel wie Chloride, Polymere wie Acrylate, Additive zur inneren Nachbehandlung, organische und anorganische Verdickungsmittel wie Stärke oder Bentonit, Hydrophobierungsmittel wie Silane, Siloxane, Siliconöle oder Salze von Fettsäuren.

Die Herstellung der erfindungsgemäßen Zusammensetzungen kann durch einfaches Abmischen, vorzugsweise unter Rühren erfolgen. Die Herstellung kann im Batchverfahren oder kontinuierlich erfolgen. Vorzugsweise erfolgt die Herstellung der Zusammensetzung bei einer Temperatur von 0°C bis 130°C, bevorzugt 5 °C bis 60 °C, besonders bevorzugt bei der jeweiligen Außentemperatur am Herstellungsstandort.

Die erfindungsgemäße Zusammensetzung kann z. B. eine Baustoffmischung, vorzugsweise eine Mörtel- oder Betonmischung sein. Dies ist insbesondere dann der Fall, wenn die erfindungsgemäße Zusammensetzung Zement und/oder Calciumsulfat (oder dessen Kristallwasser aufweisende Modifikationen) aufweisende Bindemittel sowie ggf. einen oder mehrere Zuschlagstoffe enthält.

Die erfindungsgemäßen Zusammensetzungen oder die Siloxane der Formel (I) wie oben beschrieben können als oder zur Herstellung von Baustoffmischungen oder Baustoffen, insbesondere Mörtelmischungen oder Betonmischungen verwendet werden. Die Baustoffmischungen können zur Herstellung von Mörteln oder Beton verwendet werden. Gegenstand der vorliegenden Erfindung sind deshalb auch Baustoffe bzw. Baustoffmischungen, insbesondere Mörtelmischungen, Betonmischungen oder Fertigteile, bevorzugt Fertigteile, wie z. B. Betonfertigteile oder Gipskartonplatten zu deren Herstellung eine erfindungsgemäße Zusammensetzung verwendet wurde bzw. entsprechende Baustoffe bzw. Fertigteile, die die erfindungsgemäßen Zusammensetzungen aufweisen.

### Beispiele:

### Beispiel 1: Herstellung von Polyethersiloxanen

### Eingesetzte Polyether

Die Herstellung der Polyether erfolgte gemäß den bekannten Methoden des Standes der Technik, wie in EP2182020 und den dort zitierten Schriften beschrieben. Die Bestimmung der Molgewichte Mₙ und M_{w} erfolgte durch Gelpermeationschromatographie unter den folgenden Messbedingungen: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard (76 bis 60 000 g/mol).

Die Jodzahlen [g Jod/100 g Probe] wurden nach der Methode nach Hanus, bekannt als Methode DGF C-V 11 a (53) der Deutschen Gesellschaft für Fette, bestimmt und in die Molmassen MG_{JZ} der jeweiligen Polyether umgerechnet.

### Erfindungsgemäß verwendete Polyether der Formel

CH₂=CH₂-CH₂-O-(CH₂-CH₂O-)ₓ-(CH₂-CH(R')O-)_{y}-(SO)_{z}-R"

sind
PE1a: R' = CH₃, R" = H, z = 0, x = 14, y = 3,73,
   MG_{JZ} = 893,7 g/mol, Mn = 798 g/mol, Mw = 874 g/mol
PE1b: R' = CH₃, R" = CH₃, z = 0, x = 14, y = 3,73,
   MG_{JZ} = 860,4 g/mol, Mn = 817 g/mol, Mw = 880 g/mol
PE2a: R' = CH₃, R" = H, z = 0, x = 13,6, y = 14,2,
   MG_{JZ} = 1410,1 g/mol, Mn = 1266 g/mol, Mw = 1368 g/mol
PE2b: R' = CH₃, R" = CH₃, z = 0, x = 13,6, y = 14,2,
   MG_{JZ} 1458,7 = g/mol, Mn = 1260 g/mol, Mw = 1383 g/mol
PE2c: R' = CH₃, R" = CH₃, z = 0, x = 13,6, y = 14,2,
   MG_{JZ} 1492,3 = g/mol, Mn = 1261 g/mol, Mw = 1378 g/mol
PE3a: R' = CH₃, R" = H, z = 0, x = 41, y = 43,
   MG_{JZ} = 4532,3 g/mol, Mn = 3500 g/mol, Mw = 4315 g/mol
PE3b: R' = CH₃, R" = H, z = 0, x = 37, y = 39,
   MG_{JZ} = 3845,5 g/mol, Mn = 2844 g/mol, Mw = 3727 g/mol
PE3c: R' = CH₃, R" = CH₃, z = 0, x = 37, y = 39,
   MG_{JZ} 3678,4 = g/mol, Mn = 2891 g/mol, Mw = 3617 g/mol
PE3d R' = CH₃, R" = CH₃, z = 0, x = 37, y = 39,
   MG_{JZ} 3788,1 = g/mol, Mn = 2918 g/mol, Mw = 3634 g/mol

### Erfindungsgemäß verwendete Wasserstoffsiloxane:

Die Herstellung der Wasserstoffsiloxane erfolgte wie in der EP 1439200 B1 im Beispiel 1 beschrieben. Die verwendeten Wasserstoffsiloxane sind gemäß folgender Formel definiert, 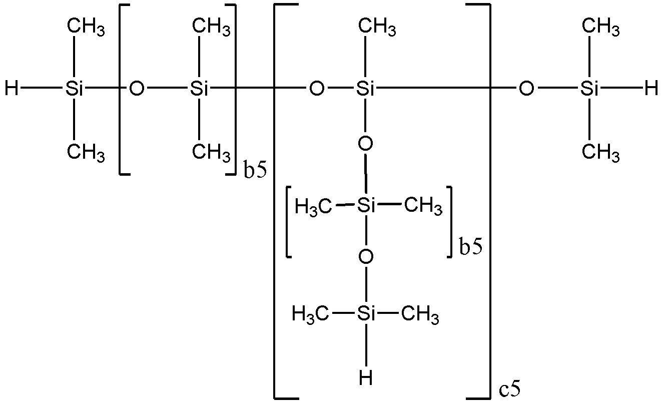 wobei
b5 = 1 bis 600, bevorzugt 10 bis 500, insbesondere 20 bis 400
   und
c5 = 0 bis 30, bevorzugt 1 bis 20, insbesondere 2 bis 15 ist.

SIL1: b5 = 68, c5 = 5; 1,17 SiH-Äquivalente / kg
SIL2: b5 = 350, c5 = 5; 0,24 SiH-Äquivalente / kg
SIL3: b5 = 74, c5 = 7; 1,32 SiH-Äquivalente / kg

### Erfindungsgemäß verwendete Polyethersiloxane:

Die Herstellung der in Tabelle 1 aufgeführten Polyethersiloxane erfolgte wie in der WO 2009/065644 in Beispiel 7 beschrieben anhand der Einwaagen aus Tabelle 1.

**Tabelle 1: Einwaagen zur Herstellung der erfindungsgemäß verwendeten Polyethersiloxane gemäß Beispiel 1**

| Synthesebeispiel | Siloxaneinwaage | Einwaagen der einzelnen Polyether | | |
|---|---|---|---|---|
| S1 | 51,6 g SIL1 | 25,3 g PE1b | 23,6 g PE2b | 134,0 g PE3c |
| S2 | 51,6 g SIL1 | 25,3 g PE1b | 23,6 g PE2b | 165,2 g PE3a |
| S3 | 144,5 g SIL2 | 14,7 g PE1b | 13,8 g PE2b | 78,2 g PE3c |
| S4 | 114,6 g SIL3 | 61,1 g PE1b | 58,3 g PE2c | 332,7 g PE3d |
| S5 | 114,6 g SIL3 | 58,8 g PE1a | 55,05 g PE2a | 337,78 g PE3b |

### Beispiel 2: Zusammensetzungen

Die erfindungsgemäßen Zusammensetzungen wurden durch Vereinigen entsprechender Mengen bei Raumtemperatur und kurzem Rühren, Schwenken oder Schütteln hergestellt.

**Tabelle 2: Erfindungsgemäße Zusammensetzungen enthaltend mindestens ein erfindungsgemäßes Siloxan und mindestens ein Fließmittel auf Basis von Polycarboxylatethern, die Zahlen geben den Anteil des Siloxans in der Zusammensetzung in Gew.-% an.**

| | Erfindungsgemäßes Siloxan | | | | |
|---|---|---|---|---|---|
| Fließmittel | S1 | S2 | S3 | S4 | S5 |
| Sika GS-1 | 0,3 | 0,3 | 0,3 | 0,3 | 0,3 |
| Meflux 1318 | 0,2 | 0,4 | 0,4 | 0,2 | 0,4 |
| Rheoplus 25 | 0,8 | 0,8 | 0,8 | 0,8 | 0,8 |
| Sika GS-2 | 0,25 | 0,25 | 0,3 | 0,3 | 0,3 |
| Plastol Ultra 109 | 0,4 | 0,15 | 0,15 | 0,15 | 0,4 |
| Dynamon SP1 | 0,1 | 0,1 | 0,3 | 0,3 | 0,3 |
| Meflux 2500 | 0,25 | 0,25 | 0,25 | 0,5 | 0,5 |
| Muestra 3 | 0,25 | 0,25 | 0,15 | 0,15 | 0,15 |
| Viscocrete1053 | 0,35 | 0,35 | 0,35 | 0,25 | 0,25 |
| Dynamon SR3 | 0,5 | 0,5 | 0,3 | 0,3 | 0,3 |
| Muestra 2 | 0,2 | 0,2 | 0,66 | 0,66 | 0,66 |

Das Produkt BASF MVA 2500 L ist von der BASF ersetzt worden gegen BASF Meflux 2500.

### Beispiel 3: Verwendung der Zusammensetzungen

In Tabelle 3 werden die in den Beispielen verwendeten Entschäumer aufgeführt. Bei dem Entschäumer E1 bis E5 handelt es sich um Siloxane der Formel (I).

**Tabelle 3: Verwendete Entschäumer**

| Entschäumer | | |
|---|---|---|
| E1 | Synthesebeispiel S1 | erfindungsgemäß |
| E2 | Synthesebeispiel S2 | erfindungsgemäß |
| E3 | Synthesebeispiel S3 | erfindungsgemäß |
| E4 | Synthesebeispiel S4 | erfindungsgemäß |
| E5 | Synthesebeispiel S5 | erfindungsgemäß |
| E6 | Tego Antifoam MR 2132, Evonik Industries AG | nicht erfindungsgemäß ohne Zusatz von E1-E5 |
| E7 | Tego IS 9520, Evonik Industries AG | nicht erfindungsgemäß ohne Zusatz von E1-E5 |
| E8 | Tego IS 9500, Evonik Industries AG | nicht erfindungsgemäß ohne Zusatz von E1-E5 |

### Beispiel 3a: Überprüfung der Löslichkeit der Entschäumer

Die Löslichkeit der Entschäumer wurde in Wasser sowie in Polycarboxylatetherbasierten Fließmitteln untersucht. Dabei wurden bei Raumtemperatur die Komponenten in den jeweiligen massenprozentualen Anteilen in Wasser bzw. das Fließmittel ohne besondere Scherung im Probenglas mit einem Labormagnetrührer der Firma IKA eingerührt. Als nicht löslich wurden Entschäumerkomponenten bezeichnet, die nach Abstellen des Rührers von der polaren Phase separieren oder gar nicht erst emulgiert werden. Die Ergebnisse sind in Tabelle 4 angegeben.

**Tabelle 4: Wasserlöslichkeit der Entschäumerkomponenten bei Raumtemperatur gemäß Beispiel 3a**

| Probe | 2g / 30 g (6,25 Gew.-%ig) | 10%ig | 20%ig | 30%ig |
|---|---|---|---|---|
| E1 | löslich (klar) | löslich (klar) | löslich (klar) | löslich (klar) |
| E6 | sichtbare Phasentrennung nach 10 min | / | / | / |
| E7 | sichtbare Phasentrennung nach 10 min | / | / | / |

Die Entschäumer E6 und E7 haben sich als nicht erfinderische Entschäumer als nicht wasserlöslich erwiesen.

**Tabelle 5: Löslichkeit der Entschäumer in Fließmitteln bei Raumtemperatur (23 °C) gemäß Beispiel 3a**

| Probe | Fließmittel | Löslichkeit 0,4 Gew.-%ig im Fließmittel |
|---|---|---|
| E1 | Sika® ViscoCrete®-1051 | löslich (klar) |
| E6 | Sika® ViscoCrete®-1051 | sichtbare Phasentrennung nach 10 min |
| E7 | Sika® ViscoCrete®-1051 | sichtbare Phasentrennung nach 10 min |
| E1 | BASF MVA 2500 L | löslich (trüb) |
| E6 | BASF MVA 2500 L | sichtbare Phasentrennung nach 10 min |
| E7 | BASF MVA 2500 L | sichtbare Phasentrennung nach 10 min |

Alle wässrigen Lösungen (Tabelle 4) und Fließmittelabmischungen (Tabelle5) wurden in einem 50 ml Schraubdeckelglas per Hand intensiv 15 Sekunden geschüttelt, um das Schaumverhalten optisch zu beurteilen. In allen Fällen war die Schaumbildung gegenüber dem Blindwert deutlich reduziert und zudem ein sehr schneller Schaumabbau zu beobachten.

### Beispiel 3b: Herstellung einer Mörtelmasse zur Bestimmung von Luftgehalt und Ausbreitmaß in Anlehnung an DIN 18555 T2

In den Rührtopf eines Hobart-Mischers wurden die pulverförmigen Komponenten der Mörtelmischung eingewogen. Der Topf wurde am Hobart-Mischer befestigt und gesichert. Zur Staubreduzierung wurde ein feuchtes Fliestuch auf das Schutzgitter gelegt. Die Trockenmischung wurde anschließend zwei Minuten lang bei Rührstufe 1 gemischt. Die flüssigen Additive wurden zum Anmachwasser gegeben und diese Mischung bei gleicher Rührstufe (Stufe 1) zur Trockenmischung zugegeben und anschließend zwei Minuten nachgerührt.

Um einen höheren Lufteintrag zu erreichen wurde anschließend folgendermaßen vorgegangen: Der Rührmotor wurde zunächst ausgestellt. Evtl. entstandener Bodensatz (sofern vorhanden) wurde per Hand aufgerührt und die Rührstufe anschließend auf Stufe 2 erhöht. Der Rührer wurde wieder angestellt und die Mischung zwei Minuten lang mit der eingestellten höheren Rührstufe durchmischt.

Die verwendeten Komponenten und deren Anteile können Tabelle 6 entnommen werden.

### Beispiel 3c: Bestimmung des prozentualen Luftgehaltes und des Ausbreitmaßes (ABM) auf dem Klopftisch in Anlehnung an DIN 18555 T2

Die fertige Mörtelmasse aus Beispiel 2 wurde in den Behälter des Luftporenmeßgerätes (Typ Testing, Seriennummer 2558, Hersteller tecnotest, IT) gegeben und glattgestrichen; der Rest wurde für die Bestimmung des Ausbreitmaßes verwahrt. Dann wurde der obere Teil des Gerätes aufgesetzt, das Gerät verschlossen und mit destilliertem Wasser befüllt. Dann wurde Luft in den oberen Teil des Behälters gepumpt und der Druck so eingestellt, dass der Zeiger der Skala auf dem Null-Strich steht. Das System wurde über ein Ventil entspannt und der Luftgehalt (in Volumen-%) auf der Anzeige abgelesen.

Der Rest der Mörtelmischung wurde in die Form auf dem Ausbreittisch gegeben und wieder glattgestrichen (Form richtig füllen). Dann wurde die Form vom Ausbreittisch gehoben und die Kurbel am Ausbreitgerät 15x innerhalb von 10 Sekunden gedreht; bei jeder Drehung der Kurbel wurde auf Grund der schneckenförmigen Bauweise ein Klopfvorgang bewirkt, der zu einer Ausbreitung der Mörtelmasse führt. Nach dem Vorgang wurde der Durchmesser des ausgebreiteten "Kuchens" mittels eines Lineals entlang zweier im rechten Winkel zueinander stehender Achsen gemessen und der Mittelwert bestimmt.

Die Messergebnisse können Tabelle 6 entnommen werden und zeigen, dass die Zugabe eines PCE-Fließmittels zu einer Mörtelmischung bestehend aus Sand, Zement und Wasser das Fließverhalten - gemessen am Ausbreitmaß ABM (Durchmesser der Mörtelprobe in mm) - verbessern, aber gleichzeitig den Lufteintrag - gemessen am Luftgehalt (in Vol.-%) - erhöhen.

Zugabe von Entschäumern senken den Luftgehalt. Insbesondere die erfindungsgemäßen Zusammensetzungen enthaltend ein Siloxan der Formel (I) und ein PCE-Fließmittel zeigen in Bezug auf Luftgehalt, Fließverhalten und Kompatibilität der erfindungsgemäßen Zusammensetzung im Gegensatz zu nicht erfindungsgemäßen Zusammensetzungen ein vorteilhaftes Verhalten.

Als Sand wurde ein Normsand nach EN196-1 der Firma Normensand GmbH, Beckum verwendet. Als Zement wurde ein Portland Zement der Firma Phoenix (RM CEM I 42,5R) verwendet. Als Fließmittel wurden MVA 2500 L der Firma BASF SE (neue Bezeichnung Meflux 2500) und Viscocrete 1053 der Firma Sika verwendet.

**Tabelle 6: Zusammensetzungen und Messergebnisse der getesteten Mörtelmassen gemäß Beispiel 3c**

| Einwaagen: | Menge [g] | Luftgehalt [Vol.-%] | ABM [mm] | Menge [g] | Luftgehalt [Vol.-%] | ABM [mm] |
|---|---|---|---|---|---|---|
| Sand | 2700 | | | 2700 | | |
| Zement | 900 | | | 900 | | |
| Wasser | 405 | | | 360 | | |
| Ohne Fließmittel | | 5,0 | 125 | | | |
| Fließmittel Fa. BASF | 4,50 | 19,0 | 270 | 4,50 | 17,0 | 118 |

| Mit Fließmittel und mit Entschäumer | | | | | | |
|---|---|---|---|---|---|---|
| E8 | | | | 0,0113 | 6,5 | 150 |
| Triisobutylphosphat | | | | 0,0113 | 7,8 | 150 |
| E1 | 0,0113 | 8,5 | 294 | 0,0113 | 8,5 | 155 |
| E2 | | | | 0,0113 | 7,0 | 147 |
| E3 | | | | 0,0113 | 6,0 | 150 |

| Einwaagen: | Menge [g] | Luftgehalt [Vol.-%] | ABM [mm] | Aussehen |
|---|---|---|---|---|
| Sand | 2700 | | | |
| Zement | 900 | | | |
| Wasser | 405 | | | |
| Ohne Fließmittel | | 5,0 | 125 | klar, homogen |
| Fließmittel Fa. Sika | 4,50 | 25,0 | 220 | klar, homogen |

| Mit Fließmittel und mit Entschäumer | | | | |
|---|---|---|---|---|
| E8 | 0,0113 | 7,5 | 178 | trüb, homogen |
| E4 | 0,0113 | 17,0 | 195 | trüb, homogen |
| E5 | 0,0113 | 16,5 | 190 | trüb, homogen |
| E8 / E4; Abmischung (1:1) | 0,0113 | 8,0 | 178 | leicht trüb, homogen |
| E8 / E5 Abmischung (1:1) | 0,0113 | 8,0 | 174 | leicht trüb, homogen |

Als Aussehen wurden das reine Fließmittel sowie die Mischungen aus den angegebenen Mengen Entschäumer und Fließmittel nach drei Tagen in Ruhe bei Raumtemperatur beurteilt.

## Patentansprüche

1. Zusammensetzung enthaltend mindestens ein Siloxan der Formel (I)
Mₐ₁M^{A}ₐ₂M^{B}ₐ₃M^{C}_{A4}D_{b1}D^{A}_{b2}D^{B}_{b3}D^{C}_{b4}T_{c1}T^{A}_{c2}T^{B}_{c3}T^{C}_{c4}Q_{d1} (Formel I)
worin
a1 = 0 bis 32,
a2 = 0 bis 10,
a3 = 0 bis 32,
a4 = 0 bis 10,
b1 = 1 bis 600,
b2 = 0 bis 10,
b3 = 0 bis 80,
b4 = 0 bis 20,
c1 = 0 bis 30,
c2 = 0 bis 10,
c3 = 0 bis 10,
c4 = 0 bis 10,
d1 = 0 bis 15,
mit der Maßgabe, dass
a1 + a2 + a3 + a4 > 3, und;
a3 + b3 + c3 ≥ 1, und;
c1 + c2 + c3 + c4 > 1,
M = [R¹₃SiO_{1/2}]
M^{A} = [R²R¹₂SiO_{1/2}]
M^{B} = [R³R¹₂SiO_{1/2}]
M^{C} = [R⁴R¹₂SiO_{1/2}]
D = [R¹₂SiO_{2/2}]
D^{A} = [R²₁R¹₁SiO_{2/2}]
D^{B} = [R³₁R¹₁SiO_{2/2}]
D^{C} = [R⁴₁R¹₁SiO_{2/2}]
T = [R¹SiO_{3/2}]
T^{A} = [R²SiO_{3/2}]
T^{B} = [R³SiO_{3/2}]
T^{C} = [R⁴SiO_{3/2}]
Q = [SiO_{4/2}],
R¹ mindestens ein Rest aus der Gruppe linearer, cyclischer oder verzweigter, aliphatischer oder aromatischer, gesättigter oder ungesättigter Kohlenwasserstoffreste mit 1 bis zu 20 C-Atomen,
R² ein Wasserstoff-, Alkoxy-, Carboxy-, Hydroxyl- oder ein Sulfonsäureesterrest,
R³ gleiche oder ungleiche Reste aus der Gruppe umfassend CH₂-CH₂-CH₂-O-(CH₂-CH₂O-)ₓ-(CH₂-C(R')₂O-)_{y}-(SO)_{z}-R" CH₂-CH₂-O-(CH₂-CH₂O-)ₓ-(CH₂-C(R')₂O-)_{y}-R"
sind, worin
x = 0 bis 100,
y = 0 bis 100,
z = 0 bis 100,
mit der Maßgabe, dass x gleich oder ungleich y sein kann und bevorzugt für mindestens einen der Reste R³ gilt, das x gleich oder größer y ist,
R' unabhängig voneinander gleich oder verschieden Wasserstoff und/oder ein gesättigter, ungesättigter oder aromatischer Kohlenwasserstoffrest mit 1 bis 12 C-Atomen, gegebenenfalls mit Heteroatomen, mit Alkyl- oder Arylresten, mit Halogenalkyl-, Halogenarylresten substituiert, wobei die Heteroatome ausgewählt sind aus der Gruppe enthaltend O, N und/oder S und die Halogen haltigen Reste bevorzugt para-Chlorphenyl- oder Cl-CH₂-Reste sind, besonders bevorzugt ist ein CH₂=CH-CH₂-O-CH₂-Rest oder eine Methylgruppe als Kohlenwasserstoffrest,
R" einen Wasserstoffrest oder eine Alkylgruppe mit 1 bis 4 C-Atomen, eine Gruppe -C(O)-R''' mit R''' = Alkylrest, eine Gruppe -CH₂-O-R', eine Alkylarylgruppe, wie z. B. eine Benzylgruppe, die Gruppe-C(O)NH-R' oder -C(O)O-R',
SO ein Styroloxid-Rest -CH(C₆H₅)-CH₂-O- ist,
R⁴ gleiche oder ungleiche Reste aus der Gruppe der mit Heteroatomen substituierten, linearen, verzweigten oder zyklischen, gesättigten, ungesättigten oder aromatischen, gegebenenfalls von Heteroatomen unterbrochenen Kohlenwasserstoffreste sind,
und mindestens ein Fließmittel auf Basis von Polycarboxylatethern oder Sulfonaten von Melamin oder von deren Harzen.

2. Zusammensetzungen nach Anspruch 1 **dadurch gekennzeichnet, dass** der Rest
R⁴ ausgewählt ist aus der Gruppe Hydroxyalkyl-, Hydroxyaryl, Aminoalkyl, Aminoaryl, Carboxyalkyl-, Carboxyaryl-, Epoxyalkyl-, Epoxyaryl-, Chloralkyl-, Chloraryl-, Fluoralkyl-, Cyanoalkyl-, Alkoxysilylalkyl-, Acryloxyaryl-, Acryloxyalkyl-, Methacryloxyalkyl-, Methacryloxypropyl- oder Vinyl-Reste oder Reste mit quaternären Stickstoffgruppen sowie der Reste
CH₂-CH₂-CH₂-O-CH₂-CH(OH)-CH₂OH CH₂-CH₂-CH₂-O-CH₂-C(CH₂OH)₂-CH₂-CH₃ 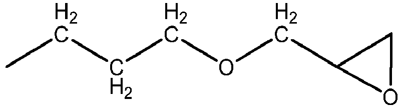 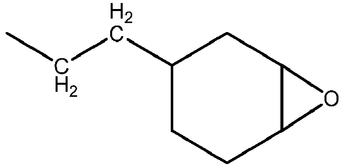 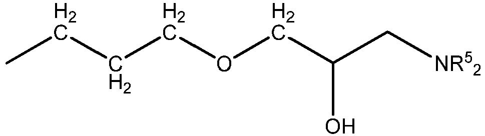 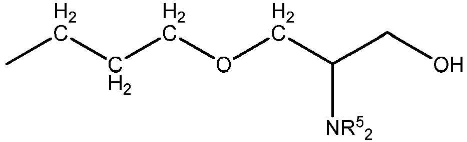 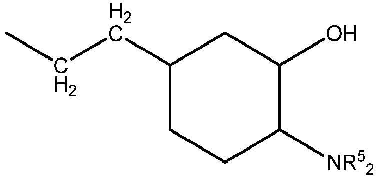 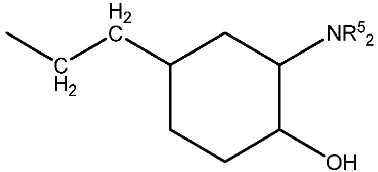 mit
R⁵ = R¹ und/oder Wasserstoff.

3. Zusammensetzungen nach Anspruch 2 **dadurch gekennzeichnet, dass** die Reste mit quaternären Stickstoffgruppen ausgewählt sind aus der Gruppe 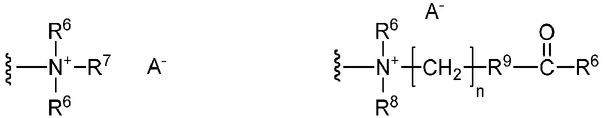 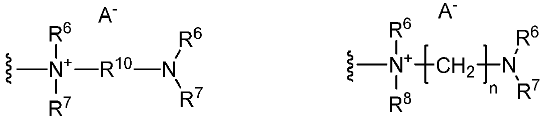 worin
R⁶, R⁷, R⁸ = jeweils unabhängig voneinander Wasserstoff oder Alkylreste mit 1 bis 30 C-Atomen oder Reste der Formel 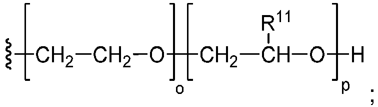
R⁹ gleiche oder verschiedene Reste aus der Gruppe -O-; -NR¹²-;
R¹⁰ gleiche oder verschiedene gegebenenfalls verzweigte divalente Kohlenwasserstoffreste, bevorzugt Ethylen oder Propylen;
R¹¹ gleiche oder verschiedene Alkyl-, Aryl- oder Alkarylreste mit 1 bis 30 C-Atomen, die gegebenenfalls Etherfunktionen enthalten, bevorzugt Methyl, Ethyl oder Phenyl, insbesondere Methyl;
R¹² gleiche oder verschiedene Reste aus der Gruppe Wasserstoff oder Alkyl mit 1 bis 6 C-Atomen;
mit
n = 2 bis 18,
o = 0 bis 30,
p = 0 bis 30,
mit der Maßgabe, dass o gleich oder ungleich p sein kann und bevorzugt o gleich oder größer p ist,
und
A⁻ = gleiche oder verschiedene Gegenionen zu den positiven Ladungen an den quaternierten Stickstoffgruppen, ausgewählt aus anorganischen oder organischen Anionen der Säuren HA, sowie deren Derivate.

4. Zusammensetzung nach Anspruch 1 bis 3, **dadurch gekennzeichnet, dass** der Massenanteil von Siloxanen der Formel (I) bezogen auf die Summe der Massenanteile von Siloxanen der Formel (I) und der Fließmittel von 0,01 bis 10% beträgt.

5. Zusammensetzung nach mindestens einem der vorhergehenden Ansprüche, **dadurch gekennzeichnet, dass** die Zusammensetzung ein Bindemittel, wie Calciumsulfat oder Zement aufweist.

6. Zusammensetzung nach Anspruch 5, **dadurch gekennzeichnet, dass** sie eine Baustoffmischung ist.

7. Zusammensetzung nach Anspruch 6, **dadurch gekennzeichnet, dass** sie eine Mörtelmischung oder Betonmischung ist.

8. Verwendung von Siloxanen der Formel (I) wie in den vorangegangenen Ansprüchen definiert oder von Zusammensetzungen gemäß einem der Ansprüche 1 bis 7 als oder zur Herstellung von Baustoffmischungen oder Baustoffen.

## Claims

1. Composition containing at least one siloxane of the formula (I)
Mₐ₁M^{A}ₐ₂M^{B}ₐ₃M^{C}ₐ₄D_{b1}D^{A}_{b2} D^{B}_{b3}D^{C}_{b4}T_{c1}T^{A}_{c2}T^{B}_{c3}T^{C}_{c4}Q_{d1} (Formula I)
where
a1= 0 to 32,
a2= 0 to 10,
a3= 0 to 32,
a4= 0 to 10,
b1= 1 to 600,
b2= 0 to 10,
b3= 0 to 80,
b4= 0 to 20,
c1= 0 to 30,
c2= 0 to 10,
c3= 0 to 10,
c4= 0 to 10,
d1= 0 to 15,
with the proviso that
a1 + a2 + a3 + a4 > 3, and;
a3 + b3 + c3 ≥ 1, and;
c1 + c2 + c3 + c4 > 1,
M = [R¹₃SiO_{1/2}]
M^{A} = [R²R¹₂SiO_{1/2}]
M^{B} = [R³R¹₂SiO_{1/2}]
M^{C} = [R⁴R¹₂SiO_{1/2}]
D = [R¹₂SiO_{2/2}]
D^{A} = [R²₁R¹₁SiO_{2/2}]
D^{B} = [R³₁R¹₁SiO_{2/2}]
D^{C} = [R⁴₁R¹₁SiO_{2/2}]
T = [R¹SiO_{3/2}]
T^{A} = [R²SiO_{3/2}]
T^{B} = [R³SiO_{3/2}]
T^{C} = [R⁴SiO_{3/2}]
Q = [SiO_{4/2}],
R¹ represents at least one radical from the group of linear, cyclic or branched, aliphatic or aromatic, saturated or unsaturated hydrocarbon radicals having 1 up to 20 carbon atoms,
R² represents a hydrogen, alkoxy, carboxy, hydroxyl or sulphonic ester radical,
R³ represents alike or unalike radicals from the group comprising
-CH₂-CH₂-CH₂-O-(CH₂-CHO-)ₓ-(CH₂-C(R')₂O-)_{y}-(SO)_{z}-R" -CH₂-CH₂-O-(CH₂-CH₂O-)ₓ-(CH₂-C(R')₂O-)_{y}⁻R"
where
x = 0 to 100,
y = 0 to 100,
z = 0 to 100,
with the proviso that x may be alike or unalike y and
preferably at least one of the R³ radicals has x being not less than y,
R' in each occurrence is the same or different and independently represents hydrogen and/or a saturated, unsaturated or aromatic hydrocarbon radical having 1 to 12 carbon atoms, optionally substituted with heteroatoms, with alkyl or aryl radicals, with haloalkyl, haloaryl radicals, wherein the heteroatoms are selected from the group containing O, N and/or S and the halogen-containing radicals are preferably para-chlorophenyl or Cl-CH₂- radicals, the hydrocarbon radial is more preferably a CH₂=CH-CH₂-O-CH₂- radical or a methyl group,
R" represents a hydrogen radical or an alkyl group of 1 to 4 carbon atoms, a group -C(O)-R''' where R''' = alkyl radical, a group -CH₂-O-R', an alkylaryl group, e.g. a benzyl group, the group -C(O)NH-R' or -C(O)O-R',
SO represents a styrene oxide radical -CH(C₆H₅)-CH₂-O-,
R⁴ represents alike or unalike radicals from the group of heteroatom-substituted linear, branched or cyclic, saturated, unsaturated or aromatic, optionally heteroatom-interrupted hydrocarbon radicals,
and at least one superplasticizer based on polycarboxylate ethers or sulphonates of melamine or of resins thereof.

2. Compositions according to Claim 1, **characterized in that** the radical
R⁴ is selected from the group hydroxyalkyl, hydroxyaryl, aminoalkyl, aminoaryl, carboxyalkyl, carboxyaryl, epoxyalkyl, epoxyaryl, chloroalkyl, chloroaryl, fluoroalkyl, cyanoalkyl, alkoxysilylalkyl, acryloyloxyaryl, acryloyloxyalkyl, methacryloyloxyalkyl, methacryloyloxypropyl or vinyl radicals or radicals having quaternary nitrogen groups and also the radicals CH₂-CH₂-CH₂-O-CH₂-CH(OH)-CH₂OH CH₂-CH₂-CH₂-O-CH₂-C(CH₂OH)₂-CH₂-CH₃ 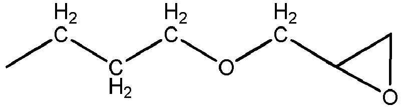 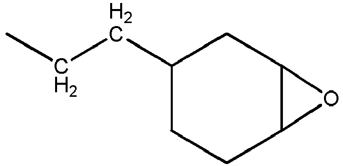 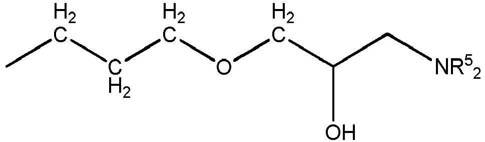 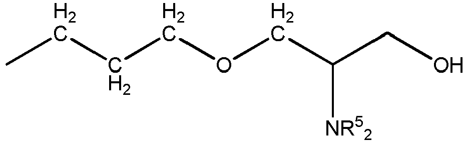 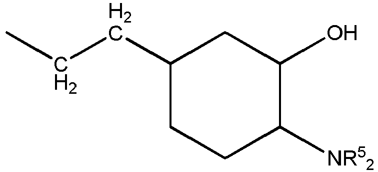 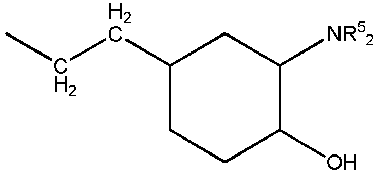 where
R⁵ = R¹ and/or hydrogen.

3. Compositions according to Claim 2, **characterized in that** the radicals having quaternary nitrogen groups are selected from the group 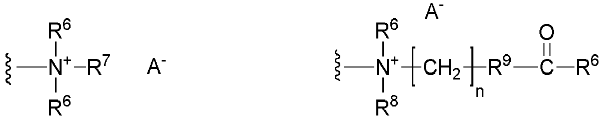 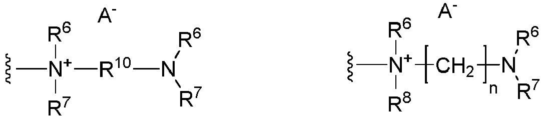 where
R⁶, R⁷, R⁸ = each independently represent hydrogen or alkyl radicals having 1 to 30 carbon atoms or radicals of the formula 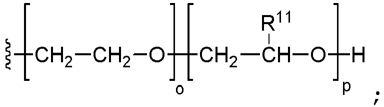
R⁹ represents identical or different radicals from the group - O-; -NR¹²-;
R¹⁰ represents identical or different optionally branched divalent hydrocarbon radicals, preferably ethylene or propylene;
R¹¹ represents identical or different alkyl, aryl or alkaryl radicals of 1 to 30 carbon atoms, which optionally contain ether functions, preferably methyl, ethyl or phenyl, especially methyl;
R¹² represents identical or different radicals from the group hydrogen or alkyl of 1 to 6 carbon atoms;
where
n = 2 to 18,
o = 0 to 30,
p = 0 to 30,
with the proviso that ο may be alike or unalike p and preferably o is not less than p,
and
A⁻ = identical or different counter-ions to the positive charges on the quaternized nitrogen groups, selected from organic or inorganic anions of the acids HA, and also derivatives thereof.

4. Composition according to Claim 1 or 2 or 3, **characterized in that** the mass fraction of siloxanes of formula (I) based on total mass fractions of siloxanes of formula (I) and of superplasticizers is from 0.01 to 10%.

5. Composition according to at least one preceding claim, **characterized in that** the composition includes a binder, such as calcium sulphate or cement.

6. Composition according to Claim 5, **characterized in that** it is a building-product mixture.

7. Composition according to Claim 6, **characterized in that** it is a mortar mixture or concrete mixture.

8. Use of siloxanes of formula (I) as defined in the preceding claims or of compositions according to any of Claims 1 to 7 as or in building-product mixtures or building products.

## Revendications

1. Composition contenant au moins un siloxane de formule (I)
**Mₐ₁M^{A}ₐ₂M^{B}ₐ₃M^{C}ₐ₄D_{b1}D^{A}_{b2}D^{B}_{b3}D^{C}_{b4}T_{c1}T^{A}_{c2}T^{B}_{c3}T^{C}_{c4}Q_{d1}** (Formule I)
dans laquelle
a1 = 0 à 32,
a2 = 0 à 10,
a3 = 0 à 32,
a4 = 0 à 10,
b1 = 1 à 600,
b2 = 0 à 10,
b3 = 0 à 80,
b4 = 0 à 20,
c1 = 0 à 30,
c2 = 0 à 10,
c3 = 0 à 10,
c4 = 0 à 10,
d1 = 0 à 15,
étant entendu que
a1 + a2 + a3 + a4 > 3 et
a3 + b3 + c3 ≥ 1 et
c1 + c2 + c3 + c4 > 1,
M = [R¹₃SiO_{1/2}]
M^{A} = [R²R¹₂SiO_{1/2}]
M^{B} = [R³R¹₂SiO_{1/2}]
M^{C} = [R⁴R¹₂SiO_{1/2}]
D = [R¹₂SiO_{2/2}]
D^{A} = [R²₁R¹₁SiO_{2/2}]
D^{B} = [R³₁R¹₁SiO_{2/2}]
D^{C} = [R⁴₁R¹₁SiO_{2/2}]
T = [R¹SiO_{3/2}]
T^{A} = [R²SiO_{3/2}]
T^{B} = [R³SiO_{3/2}]
T^{C} = [R⁴SiO_{3/2}]
Q = [SiO_{4/2}],
R¹ = au moins un radical du groupe des radicaux hydrocarbonés linéaires, cycliques ou ramifiés, aliphatiques ou aromatiques, saturés ou insaturés comprenant 1 à 20 atomes de carbone,
R² = un radical hydrogène, alcoxy, carboxy, hydroxyle ou ester d'acide sulfonique,
R³ = des radicaux identiques ou différents du groupe comprenant
**CH₂-CH₂-CH₂-O-(CH₂-CH₂O-)ₓ-(CH₂-C(R')₂O-)_{y}-(SO)_{z}-R" CH₂-CH₂-O-(CH₂-CH₂O-)ₓ-(CH₂-C(R')₂O-**)_{y}-R"
où
x = 0 à 100,
y = 0 à 100,
z = 0 à 100,
étant entendu que x peut être égal à ou différent de y et, de préférence, pour au moins un des radicaux R³, x est égal ou supérieur à y,
R' = identiques ou différents, indépendamment les uns des autres, hydrogène et/ou un radical hydrocarboné saturé, insaturé ou aromatique comprenant 1 à 12 atomes de carbone, le cas échéant substitué par des hétéroatomes, par des radicaux alkyle ou aryle, par des radicaux halogénoalkyle, halogénoaryle ; les hétéroatomes étant choisis dans le groupe contenant O, N et/ou S et les radicaux contenant halogène étant de préférence des radicaux para-chlorophényle ou Cl-CH₂ ; un radical CH₂=CH-CH₂-O-CH₂ ou un groupe méthyle étant particulièrement préféré comme radical hydrocarboné,
R" = un radical hydrogène ou un groupe alkyle comprenant 1 à 4 atomes de carbone, un groupe -C(O)-R''' où R''' = radical alkyle, un groupe -CH₂-O-R', un groupe alkylaryle, tel que par exemple un groupe benzyle, le groupe -C(O)NH-R' ou -C(O)O-R',
SO = radical oxyde de styrène -CH (C₆H₅) -CH₂-O-,
R⁴ = des radicaux identiques ou différents du groupe des radicaux hydrocarbonés substitués par des hétéroatomes, linéaires, ramifiés ou cycliques, saturés, insaturés ou aromatiques, le cas échéant interrompus par des hétéroatomes,
et au moins un fluidifiant à base de polycarboxylate-éthers ou de sulfonates de mélamine ou de leurs résines.

2. Compositions selon la revendication 1, **caractérisées en ce que** le radical
R⁴ est choisi dans le groupe formé par les radicaux hydroxyalkyle, hydroxyaryle, aminoalkyle, aminoaryle, carboxyalkyle, carboxyaryle, époxyalkyle, époxyaryle, chloroalkyle, chloroaryle, fluoroalkyle, cyanoalkyle, alcoxysilylalkyle, acryloxyaryle, acryloxyalkyle, méthacryloxyalkyle, méthacryloxypropyle ou vinyle ou les radicaux comprenant des groupes azotés quaternaires ainsi que les radicaux
**CH₂-CH₂-CH₂-O-CH₂-CH(OH)-CH₂OH CH₂-CH₂-CH₂-O-CH₂-C(CH₂OH)₂-CH₂-CH₃** 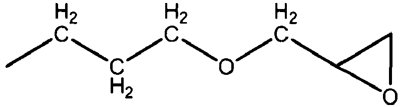 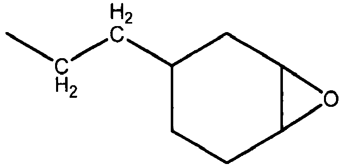 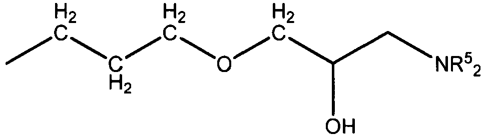 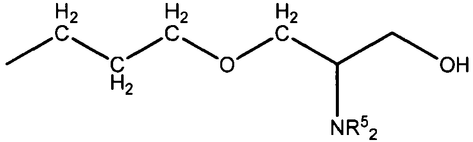 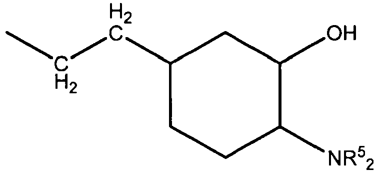 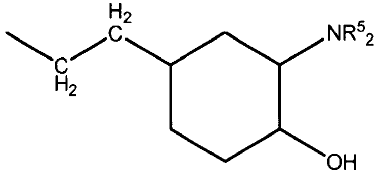
où
R⁵ = R¹ et/ou hydrogène.

3. Compositions selon la revendication 2, **caractérisées en ce que** les radicaux comprenant des groupes azotés quaternaires sont choisis dans le groupe 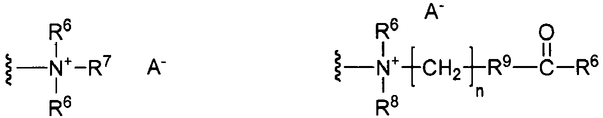 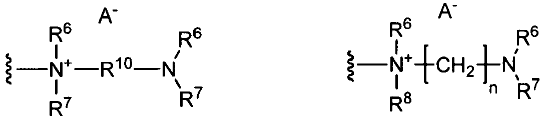 dans lequel
R⁶, R⁷, R⁸ = à chaque fois indépendamment les uns des autres, hydrogène ou des radicaux alkyle comprenant 1 à 30 atomes de carbone ou des radicaux de formule 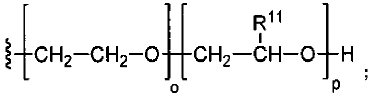
R⁹ = des radicaux identiques ou différents du groupe formé par -O- ; -NR¹²- ;
R¹⁰ = des radicaux hydrocarbonés divalents, identiques ou différents, le cas échéant ramifiés, de préférence éthylène ou propylène ;
R¹¹ = des radicaux alkyle, aryle ou alkaryle identiques ou différents comprenant 1 à 30 atomes de carbone, qui contiennent le cas échéant des fonctions éther, de préférence méthyle, éthyle ou phényle, en particulier méthyle ;
R¹² = des radicaux identiques ou différents du groupe formé par hydrogène ou alkyle comprenant 1 à 6 atomes de carbone ;
où
n = 2 à 18,
o = 0 à 30,
p = 0 à 30,
étant entendu que ο peut être égal à ou différent de p et, de préférence, ο est égal ou supérieur à p,
et
A⁻ = des contre-ions, identiques ou différents, des charges positives sur les groupes azotés quaternisés, choisis parmi les anions inorganiques ou organiques des acides HA, ainsi que leurs dérivés.

4. Composition selon la revendication 1 à 3, **caractérisée en ce que** la proportion massique de siloxanes de formule (I) par rapport à la somme des proportions massiques des siloxanes de formule (I) et du/des fluidifiant(s) est de 0,01 à 10%.

5. Composition selon au moins l'une quelconque des revendications précédentes, **caractérisée en ce que** la composition contient un liant, tel que le sulfate de calcium ou le ciment.

6. Composition selon la revendication 5, **caractérisée en ce qu'**il s'agit d'un mélange de matériau de construction.

7. Composition selon la revendication 6, **caractérisée en ce qu'**il s'agit d'un mélange de mortier ou d'un mélange de béton.

8. Utilisation de siloxanes de formule (I) tels que définis dans les revendications ci-dessus ou de compositions selon l'une quelconque des revendications 1 à 7 comme, ou pour la préparation de, mélanges de matériau de construction ou matériaux de construction.
